# EUROPÄISCHE PATENTSCHRIFT

(11) **EP 1 727 868 B1**
(45) Veröffentlichungstag und Bekanntmachung des Hinweises auf die Patenterteilung: **28.05.2008**
(21) Anmeldenummer: 05716066.5
(22) Anmeldetag: 15.03.2005
(51) Int. Cl.: C09D 4/06, C08F 283/00, C09D 5/44

(54) **CER-VERBINDUNGEN ALS INITIATOREN FÜR DIE DUAL-CURE-HÄRTUNG**
CER COMPOUNDS USED AS INITIATORS FOR DUAL CURING
COMPOSES DE CER UTILISES COMME INITIATEURS POUR LE DOUBLE DURCISSEMENT ("DUAL CURE")

(30) Priorität: 17.03.2004 DE 102004013391
(43) Veröffentlichungstag der Anmeldung: 06.12.2006
(73) Patentinhaber: BASF SE, 67056 Ludwigshafen (DE)
(72) Erfinder: GRUBER, Nick, 68161 Mannheim (DE); SCHWALM, Reinhold, 67157 Wachenheim (DE); BECK, Erich, 68526 Ladenburg (DE); HEISCHKEL, Yvonne, 68199 Mannheim (DE); DECKER, Christian, F-68200 Mulhouse (FR); STUDER, Katia, F-68170 Rixheim (FR)
(86) Internationale Anmeldenummer: PCT/EP2005/002733
(87) Internationale Veröffentlichungsnummer: WO 2005/090489

(56) Entgegenhaltungen:
- EP-A- 0 402 932
- WO-A-01/12690
- WO-A-94/24207

## Beschreibung

Die vorliegende Erfindung betrifft die Verwendung von Cer-Verbindungen als Initiatoren für die Dual-Cure-Härtung und Beschichtungsmassen, die Cer-Verbindungen enthalten.

Gemische aus Cersalzen und Polymerisationsinhibitoren sind bekannte Systeme zur Stabilisierung von ethylenisch ungesättigten Verbindungen gegen unerwünschte Polymerisation, beispielsweise aus US 4,542,231.

US 3,755,234 beschreibt die Pfropf- bzw. Blockpolymerisation von Polyvinylalkoholen in Gegenwart von tetravalenten Cer-Verbindungen. Die Polymerisation wird thermisch induziert und verläuft bei erhöhten Temperaturen von 40 - 65 °C.

Als Lösungsmittel für die Cer-Verbindungen werden saure, wäßrige Lösungen offenbart, es wird angestrebt, die Polymerisation bei einem pH unter 6,0, bevorzugt unter 3,0 durchzuführen. Eine lichtinduzierte Polymerisation wird nicht offenbart.

WO 94/24207 beschreibt die Pfropfpolymerisierung von ethylenisch ungesättigten Verbindungen auf aktiven Wasserstoff enthaltende Verbindungen mit Hilfe von Peroxiden als radikalischen Polymerisationskatalysatoren, die durch Metallionen, wie unter anderem z.B. Ce⁴⁺ oder Ce³⁺ aktiviert werden. Eine Kombination aus Peroxid und Schwermetallionen, u.a. Cersalze, zum Starten einer Pfropfpolymerisation wird auch in DE-A1 198 06 745 offenbart.

Hier fungiert die Cer-Verbindung nicht als Polymerisationsinitiator sondern als Aktivator für den eigentlichen Katalysator, das Peroxid.

R. K. Das, D. Basu und A. Banerjee beschreiben in Journal of Applied Polymer Science, 1999, 72, 135-140 den Einfluß von Belichtung auf die Pfropfpolymerisation von Methylmethacrylat (MMA) auf Viskose. Demnach wird durch Bestrahlung die Pfropfung von MMA auf Viskose durch Anwesenheit eines Ce⁴⁺/Ti³⁺-Systems bzw. Ce⁴⁺ in saurer Lösung verstärkt, während sich kein Einfluß der Bestrahlung auf die Bildung von Polymethylmethacrylat abzeichnet.

Banerjee et al. erkennen also nicht die Eignung von Cer-Verbindungen für die Polymerisation.

J. Dong, J. Yang, K. Qiu und X. Feng beschrieben im Chinese Journal of Polymer Science, 1992, 10, 169-175 den Einfluß von UV-Licht auf die Polymerisation von Methylacrylat mit Ce(IV)-lonen in saurer und wäßriger Lösung.

Nachteilig an allen oben beschriebenen Offenbarungen ist, daß Säure nicht als Lösungsvermittler für die Cer-Verbindungen in Lackbeschichtungen eingesetzt werden kann, da dadurch eine Wetterfestigkeit und Hitzbeständigkeit verschlechtert werden, wie es z.B. beschrieben ist in US 3,755,234, Spalte 2, Z. 57 bis Spalte 3, Z. 15. Der Zusatz von Wasser führt in organischen Beschichtungsmassen zu Phasentrennung, so daß das als Initiator fungierende Cer sich in der wäßrigen Phase anreichert statt in der organischen, wo es die Initiation starten soll, oder zu Emulsionen, die die Beschichtungsmassen eintrüben.

Aufgabe der vorliegenden Erfindung war es, Dual-Cure härtbare Beschichtungsmassen mit verbesserten Eigenschaften zur Verfügung zu stellen.

Die Aufgabe wurde gelöst durch Beschichtungsmassen, enthaltend- mindestens eine Cer(IV)-Verbindung,
entweder
- mindestens eine Verbindung A mit mindestens einer gegenüber Isocyanat reaktiven Gruppe und mindestens einer radikalisch polymerisierbaren, ungesättigten Gruppe,
- mindestens eine isocyanatgruppenhaltige Verbindung B, oder
- mindestens eine Verbindung C mit mindestens einer Isocyanatgruppe und mindestens einer radikalisch polymerisierbaren, ungesättigten Gruppe,
- mindestens eine Verbindung D mit mindestens einer gegenüber Isocyanat reaktiven Gruppe, und weiterhin
- gegebenenfalls mindestens einen Photoinitiator,
- gegebenenfalls mindestens ein Lösungsmittel,
- gegebenenfalls mindestens ein radikalisch polymerisationsfähiges Monomer,
- gegebenenfalls mindestens eine multifunktionelle, polymerisationsfähige Verbindung und
- gegebenenfalls weitere lacktypische Additive.

Mit dem Begriff "Dual Cure" beziehungsweise "Multi Cure" ist im Rahmen dieser Schrift ein Härtungsprozeß bezeichnet, der über zwei beziehungsweise mehr als zwei Mechanismen erfolgt und zwar beispielsweise ausgewählt aus strahlungs-, feuchtigkeits-, chemisch, oxidativ und/oder thermisch härtend, bevorzugt ausgewählt aus strahlungs-, feuchtigkeits-, chemisch und/oder thermisch härtend, besonders bevorzugt ausgewählt aus strahlungs-, chemisch und/oder thermisch härtend und ganz besonders bevorzugt strahlungs- und chemisch härtend.

In einer bevorzugten Ausführungsform der Erfindung handelt es sich bei der chemischen Härtung zumindest teilweise um Reaktionen zwischen Isocyanatgruppen und gegenüber Isocyanat reaktiven Gruppen. Denkbar sind aber auch die Reaktionen zwischen Epoxiden und gegenüber Epoxidgruppen reaktiven Gruppen, beispielsweise Amino- oder Hydroxygruppen, oder die Aufbaureaktion von Aminoharzen, also die Reaktion zwischen Aminogruppen enthaltenden Verbindungen und Aldehyden.

Strahlungshärtung im Sinne dieser Schrift ist definiert als die Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Erfindungsgemäß werden Cer(IV)-Verbindungen zum Starten einer radikalischen Polymerisation verwendet.

Cer(IV)-Verbindungen im Sinne dieser Erfindung sind solche Verbindungen, die mindestens ein Ce⁴+ -Kation mit beliebigen Gegenionen enthalten.

Als Gegenionen kommen in Frage F⁻, Cl⁻, ClO⁻, ClO₃⁻, ClO₄⁻ , Br⁻, J⁻, JO₃⁻, CN⁻, OCN⁻, SCN⁻, NO₂⁻, NO₃⁻_{,} HCO₃⁻, CO₃²⁻ , S²⁻, SH⁻, HSO₃⁻ SO₃²⁻, HSO₄⁻ , SO₄²⁻, S₂O₂²⁻, S₂O₄²⁻, S₂O₅²⁻, S₂O₈²⁻, S₂,O₇²⁻, S₂O₈²⁻, H₂PO₂⁻, H₂PO₄⁻ , HPO₄2⁻, PO₄³⁻, P₂O₇⁴⁻, Dithiocarbamat, Salicylat, (OCₚH₂ₚ₊₁)⁻, (CₚH₂ₚ₋₁O₂)⁻, (CₚH₂ₚ₋₃O₂)⁻ sowie (Cₚ₊₁H₂ₚ₋₂O₄)²⁻, wobei p für die Zahlen 1 bis 20 steht, Methansulfonat (CH₃SO₃⁻), Trifluormethansulfonat (CF₃SO₃⁻), Toluolsulfonat (CH₃C₆H₄SO₃), Benzolsulfonat (C₆H₅SO₃⁻), Hydroxid (OH⁻), Anionen aromatischer Säuren wie Benzoesäure, Phtalsäure, und dergleichen und 1,3-Dicarbonylverbindungen.

Weiterhin genannt seien Carboxylate, insbesondere sind zu erwähnen Formiat, Acetat, Propionat, Hexanoat und 2-Ethylhexanoat sowie Oxalat, Acetylacetonat, Acrylat und Methacrylat, bevorzugt Formiat, Acetat, Propionat, Oxalat, Acetylacetonat, Acrylat und Methacrylat.

Diese Salze können auch als Hydrate vorliegen, die gleichermaßen geeignet sind.

Bevorzugte Cer(IV)-Verbindungen sind Ammoniumhexanitratocerat(IV) (Cer(IV)ammoniumnitrat, (NH₄)₂[Ce(NO₃)₆]), Natriumhexanitratocerat(IV) (Na₂[Ce(NO₃)₃]), Kaliumhexanitratocerat(IV) (K₂[Ce(NO₃)₆]), Cer(IV)ammoniumsulfat (Ce(NH₄)₂(NO₃)₆)), Cer(IV)hydroxid, Cer(IV)isopropylat-Isopropanol Komplex, Cer(IV)oxid (CeO₂) und Cer(IV)sulfat (Ce(SO₄)₂).

Selbstverständlich ist es auch möglich, Cer-Verbindungen einer niedrigeren Oxidationsstufe als +4 einzusetzen und diese in der Beschichtungmasse mit Hilfe eines Oxidationsmittels in eine Cer(IV)-Verbindung zu überführen, insbesondere Cer(III)-Verbindungen.

Bevorzugt als Cer(III)-Verbindungen sind Cer(III)acetat, Cer(III)acetat Hydrat, Cer(III)acetylacetonat, Cer(III)acetylacetonat Hydrat, Cer(III)bromid, Cer(III)carbonat, Cer(III)carbonat Hydrat, Cer(III)chlorid (CeCl₃), Cer(III)chlorid Heptahydrat, Cer(I!I)-ethylhexanoat und dessen Lösungen oder Dispersionen in Mineralöl oder Naphta (Octa Soliogen Cerium® 6 und 10 d. Fa. Borcherts, Monheim, Deutschland, CAS-Nummer [58797-01-4]), Cer(III)fluorid, Cer(lll)nitrat (Ce(NO₃)₃), Cer(lll)nitrat Hexahydrat, Cer(III)oxalat, Cer(III)sulfat, Cer(III)sulfat Octahydrat, Cer(III)oxid oder Cer(III)acrylat.

Als Oxidationsmittel kommen dabei erfindungsgemäß solche in Frage, die ihrerseits keine Polymerisation auslösen, d.h. keine Radikalbildner sind.

Bevorzugt ist es jedoch, die Cer-Verbindungen als Cer(IV)-Verbindungen einzusetzen.

Die Cer-Verbindungen können auch als Komplexe eingesetzt werden, beispielsweise komplexiert mit amin-, schwefel-, stickstoff-, phosphor- und/oder sauerstoffhaltigen Liganden oder als Cyclopentadienylkomplexe. Beispiele für Liganden sind Mercaptane, Sulfide, primäre, sekundäre oder tertiäre Amine, primäre, sekundäre oder tertiäre Phosphine, Alkohole und Ether sowie Cyclopentadien, Benzol, Furan, Pyrrol, Pyridin und Thiophen, sowie deren Derivate, sowie Komplexbildner wie Ethanolamine, Ethylendiamintetraacetat, Ethylendiamintriacetat, Nitrilotriessigsäure und dergleichen.

Die Reinheit der eingesetzten Cer-Salze ist erfindungsgemäß nicht wesentlich, in der Regel ist es ausreichend, wenn das Salz in technischer Reinheit, beispielsweise von 80% oder mehr vorliegt, bevorzugt mindestens 90%, besonders bevorzugt mindestens 95%, ganz besonders bevorzugt mindestens 98 % und insbesondere mindestens 99%. Selbstverständlich können die Salze auch in höheren oder niedrigeren Reinheiten eingesetzt werden.

Selbstverständlich können auch Gemische von mehreren Cer-Salzen eingesetzt werden, beispielsweise aus zwei oder drei Cer-Salzen, bevorzugt ist jedoch die Verwendung eines Cer-Salzes.

Die Cer-Verbindung ist in der Regel in Mengen bis zu 2 Gew.-% (bezogen auf die gesamte Beschichtungsmasse) enthalten, bevorzugt bis zu 1,5, besonders bevorzugt bis zu 1,0, ganz besonders bevorzugt bis 0,5 Gew.-%.

Überlicherweise ist die Cer-Verbindung in Mengen von mindestens 0,01 Gew.-% enthalten, bevorzugt mindestens 0,05, besonders bevorzugt mindestens 0,1 und ganz besonders bevorzugt mindestens 0,2 Gew.-%.

Die Beschichtungsmassen enthalten erfindungsgemäß in einer ersten Ausführungsform mindestens eine Verbindung A mit mindestens einer gegenüber Isocyanat reaktiven Gruppe und mindestens einer radikalisch polymerisierbaren, ungesättigten Gruppe zusammen mit einer anderen Verbindung B, die mindestens eine Isocyanatgruppe aufweist.

In einer weiteren Ausführungsform enthalten die erfindungsgemäßen Beschichtungsmassen mindestens eine Verbindung C mit mindestens einer Isocyanatgruppe und mindestens einer radikalisch polymerisierbaren, ungesättigten Gruppe und dazu mindestens eine Verbindung D mit mindestens einer gegenüber Isocyanat reaktiven Gruppe.

Gegenüber Isocyanat reaktive Gruppen können z.B. sein -OH, -SH, -NH₂ und -NHR³, wobei R³ C₁ - C₄-Alkyl sein kann, also Methyl, Ethyl, iso-Propyl, n-Propyl, n-Butyl, iso-Butyl, sek-Butyl oder tert-Butyl.

Polymerisierbare Gruppen können solche sein, die ungesättigte Bindungen aufweisen, bevorzugt Kohlenstoff-Kohlenstoff-Doppelbindungen, besonders bevorzugt α,β-ethylenisch ungesättigte Carbonylverbindungen.

Radikalisch polymerisierbare Gruppen sind beispielsweise isolierte ethylenisch ungesättigte Gruppen, konjugierte ungesättigte Gruppen, vinylaromatische Gruppen, vinyl und vinylidenchloridische Gruppen, N-Vinylamide, Vinylpyrrolidone, Vinyllactame, Vinylester, (Meth)acrylester oder Acrylnitrile.

Verbindungen A mit mindestens einer gegenüber Isocyanat reaktiven Gruppe und mindestens einer radikalisch polymerisierbaren, ungesättigten Gruppe weisen mindestens eine, bevorzugt 1 bis 10, besonders bevorzugt 1 bis 6 und ganz besonders bevorzugt 1 bis 4 gegenüber Isocyanat reaktiven Gruppen auf und gleichzeitig mindestens eine, bevorzugt bevorzugt 1 bis 10, besonders bevorzugt 1 bis 6 und ganz besonders bevorzugt 1 bis 4 radikalisch polymerisierbare, ungesättigte Gruppen auf.

Geeignete Verbindungen A können z.B. Monoester von a,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxylgruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 1178 oder Polyethylenglykol mit einem Molgewicht zwischen 238 und 898. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Weiterhin kann es sich um Reaktionsprodukte der Umsetzung der oben angeführten α,β-ungesättigten Carbonsäuren mit Epoxiden, bevorzugt mindestens zweifach funktionalisierten Epoxiden handeln.

Dabei kann es sich beispielsweise um die Umsetzungsprodukte von (Meth)Acrylsäure mit Epoxiden oder aromatischen oder aliphatischen Glycidylethern handeln, bevorzugt den Umsetzungsprodukten von (Meth)Acrylsäure mit Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere) CAS-Nr. [66072-39-7]), Phenol basierte Epoxy Novolake (CAS-Nr. [9003-35-4]) und Kresol basierte Epoxy Novolake (CAS-Nr. [37382-79-9]), sowie weiterhin 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol α,ω-bis(2,3-epoxy-propoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Bevorzugt verwendet werden 2-Hydroxyethyl(meth)acrylat, 2- oder 3-Hydroxypropyl-(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl-(meth)acrylamid, 2-Aminopropyl(meth)acrylamid, 3-Aminopropyl(meth)acrylamid, 2-Hydroxyethyl(meth)acrylamid, 2-Hydroxypropyl(meth)acrylamid oder 3-Hydroxypropyl-(meth)acrylamid sowie die Umsetzungsprodukte von (Meth)acrylsäure mit Bisphenol-A-diglycidylether, Bisphenol--F-diglycidylether, 1,4-Butandioldiglycidether, 1,6-Hexandioldiglycidylether, Trimethylolpropantriglycidylether oder Pentaerythrittetraglycidylether.

Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropylmethacrylat und das Umsetzungsprodukt von Acrylsäure mit Bisphenol-A-diglycidylether oder 1,4-Butandioldiglycidether.

Als isocyanatgruppenhaltige Verbindungen B kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat(1,6-Diisocyanatohexan), Octamethylendiisocyanat, Decamethytendiisocyanat, Dodecamethytendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan-(Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendüsocyanat und deren Isomerengemische, m- oder p-Xylylendüsocyanat, 2,4'- oder 4,4'-DÜsocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-düsocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4' -diisocyanat.

Es können auch Gemische der genannten Diisocyanate vorliegen.

Bevorzugt sind Hexamethylendiisocyanat, 1,3-Bis(isocyanatomethyl)cyclohexan, 1-sophorondiisocyanat und Di(isocya*natocyclohexyl)methan. Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew.% bezogen auf das Di- und Polyisocyanat(gemisch), bevorzugt 15 bis 60 Gew.-% und besonders bevorzugt 20 bis 55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1. Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyolische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2. Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3. Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4. Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5. Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6. Uretonimin-modifizierte Polyisocyanate:

Die Polyisocyanate 1) bis 6) können im Gemisch, gegebenenfalls auch im Gemisch mit Diisocyanaten, eingesetzt werden.

Bei den Verbindungen C mit mindestens einer Isocyanatgruppe und mindestens einer radikalisch polymerisierbaren, ungesättigten Gruppe kann es sich um solche handeln, die mindestens eine, bevorzugt 1 bis 10, besonders bevorzugt 1 bis 6 und ganz besonders bevorzugt 1 bis 4 Isocyanatgruppen und mindestens eine, bevorzugt 1 bis 10, besonders bevorzugt 1 bis 6 und ganz besonders bevorzugt 1 bis 4 radikalisch polymerisierbare, ungesättigte Gruppen aufweisen.

Dabei kann es sich beispielsweise um Reaktionsprodukte aus den oben genannten Verbindungen A mit Verbindungen B handeln, wobei das stöchiometrische Verhältnis von A zu B so gewählt ist, daß noch freie Isocyanatgruppen im Reaktionsprodukt verbleiben, also infolge einer unterstöchiometrischen Reaktion zwischen Isocyanatgruppen in A mit gegenüber Isocyanat reaktiven Gruppen in B. Gegebenenfalls können die Verbindungen B auch weitere radikalisch polymerisierbare, ungesättigte Gruppen aufweisen.
Besonders bevorzugt kann es sich um solche Verbindungen handeln, die beschrieben sind in WO 00/39183, S. 4, Z. 14 bis S. 16, Z. 40, auf die hiermit im Rahmen der vorliegenden Offenbarung ausdrücklich Bezug genommen sein soll, ganz besonders bevorzugt handelt es sich um solche Verbindungen, wie sie in der WO 00/39183 in Beispiel 1 und Tabelle 1 beschrieben sind, auf die ebenfalls Bezug genommen sei.

Verbindungen D sind solche mit mindestens einer gegenüber Isocyanat reaktiven Gruppe, bevorzugt mit 1 bis 10, besonders bevorzugt 1 bis 6 und ganz besonders bevorzugt 1 bis 4 gegenüber Isocyanat reaktiven Gruppen. Gegebenenfalls können die Verbindungen D auch weitere radikalisch polymerisierbare, ungesättigte Gruppen aufweisen.

Bei den Verbindungen D kann es sich beispielsweise um mindestens zweiwertige Polyalkohole, wie sie unten aufgeführt sind, handeln.
Bevorzugt handelt es sich um die oben aufgeführten Verbindungen A, und besonders bevorzugt um 2-Hydroxyethyl(meth)acrylat, 2- oder 3-Hydroxypropyl(meth)acrylat, 1,4-Butandiolmono(meth)acrylat, Neopentylglykolmono(meth)acrytat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopropyl(meth)acrylamid, 2-Hydroxyethyl(meth)-acrylamid, 2-Hydroxypropyl(meth)acrylamid oder 3-Hydroxypropyl(meth)acrylamid sowie die Umsetzungsprodukte von (Meth)acrylsäure mit Bisphenol-A-diglycidylether, Bisphenol-F-diglycidylether, 1,4-Butandioldiglycidether, 1,6-Hexandioldiglycidylether, Trimethylolpropantriglycidylether.oder Pentaerythrittetraglycidylether.

Ganz besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxy.. propylmethacrylat und das Umsetzungsprodukt von Acrylsäure mit Bisphenot-A-diglycidylether oder 1,4-Butandioldigtycidether.

In der erfindungsgemäßen Beschichtungsmasse ist das Verhältnis der Verbindungen A : B bzw. C : D so zu wählen, daß im Verlauf der Härtung insbesondere die Isocyanatgruppen überwiegend, d.h. zu mehr als 50%, bevorzugt zu mehr als 66%, besonders bevorzugt zu mehr als 75%, ganz besonders bevorzugt zu mehr als 85%, insbesondere zu mehr als 90% und speziell zu mehr als 95%, abreagiert sind.

Dies kann man beispielsweise dadurch erreichen, daß man eine Stöchiometrie von Isocyanatgruppen zu gegenüber Isocyanat reaktiven Gruppen im Bereich von 1 : 0,8 - 2,0, bevorzugt 1 : 0,9 -1,5 und besonders bevorzugt 1 : 1,0 -1,2 wählt.

Es können aber auch höhere oder niedrigere molaren Verhältnisse sinnvoll sein, beispielsweise ein höhere Anteil Isocyanatgruppen, wenn die Beschichtung zusätzlich feuchtigkeitshärtbar sein soll.

Optional können die Cer-Verbindungen im Gemisch mit anderen Photoinitiatoren eingesetzt werden. Dies können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten. In einer bevorzugten Ausführungsform der Erfindung ist mindestens ein weiterer Photoinitiator neben der mindestens einen Cer-Verbindung anwesend.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure^{®} 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphtliochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetytbenzol, 4-Amino-benzophenon, 4'-Methoxyacetophenon, β-Methylanthrachinon, *tert*-Butylanthrachinon, Anthrachinoncarbonysäureester, Benzaldehyd, α-Tetralon; 9-Acetylphenanthren, 2-Acetylphenanthren, 10-Thioxanthenon, 3-Acetylphenanihren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzointetrahydropyranylether, Benzoin-methylether, Benzoin-ethylether, Benzoin-butylether, Benzoin-*iso-*propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert-*Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Optional kann in den erfindungsgemäßen Beschichtungsmassen mindestens ein Lösungsmittel eingesetzt werden. Geeignet sind solche Lösungsmittel, in denen die betreffende Cer-Verbindung löslich ist.

Derartige Lösungsmittel sind beispielsweise Wasser, (Meth)acrylsäure(ester), Aceton, Acetylaceton, Acetoessigester, niedere Alkohole, wie z.B. Methanol, Ethanol, iso-Propanol, n-Propanol, n-Butanol, iso-Butanol, *sek*-Butanol, *tert*-Butanol, 2-Ethylhexylalkohol, Ethylenglycol, Diethylenglycol, Ethylenglycoldimethylether, Ethylenglycoldiethylether, Ethylenglycoldi-n-butylether, Diethylenglycol, Diethylenglycoldimethylether, Diethylenglycoldiethylether, Diethylenglycoldi-n-butylether, Polyethylenglykole mit einer Molmasse bis zu 898, Polypropylenglykole mit einer Molmasse von 134 bis 308, niedere Carbonsäuren, wie z.B. Ameisensäure, Essigsäure oder Propionsäure, THF, Dioxan, Acetonitril, Propionitril, Dimethylformamid, Dimethylsulfoxid, Sulfolan, Dimethylcarbonat, Diethylcarbonat, Di-n-butylcarbonat, 1,2-Ethylencarbonat, 1,2-Propylencarbonat oder 1,3-Propylencarbonat.

Bevorzugt sind solche Lösungsmittel, in denen die Cer-Verbindung zu mindestens 0,5, bevorzugt mindestens 1, besonders bevorzugt mindestens 2, ganz besonders bevorzugt mindestens 5 und insbesondere mindestens 10 Gew.-% löslich ist und die ihrerseits mit der Beschichtungsmasse im verwendeten Mengenverhältnis mischbar sind.

Ganz besonders bevorzugt sind Wasser, Methanol, Ethanol, iso-Propanol, n-Propanol, n-Butanol, Ethylenglycol, Diethylenglycol, Ethylenglycoldimethylether, THF, Dioxan, Acetonitril, Propionitril, Dimethylformamid, Dimethylsulfoxid, Sulfolan, Dimethylcarbonat, Diethylcarbonat, 1,2-Ethylencarbonat und 1,2-Propylencarbonat.

Insbesondere bevorzugt sind Wasser, Methanol, Ethanol, iso-Propanol, n-Propanol, n-Butanol, Ethylenglycol, THF, Dioxan, Acetonitril, Dimethylformamid und Dimethylsulfoxid.

Radikalisch polymerisationsfähige Monomere sind beispielsweise Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethylacrylat, 4-Hydroxybutylacrylat , Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkylcarbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, n-Propylvinylether, iso-Propylvinylether, *n*-Butylvinylether, *sek*-Butylvinylether, iso-Butylvinylether, *tert*-Butylvinylether, 4-Hydroxybutylvinylether, sowie Gemische davon.

(Meth)Acrylsäure steht in dieser Schrift für Methacrylsäure und Acrylsäure, bevorzugt für Acrylsäure.

Multifunktionelle, polymerisationsfähige Verbindungen sind bevorzugt multifunktionelle (Meth)acrylate, die mehr als 1, bevorzugt 2 -10, besonders bevorzugt 2 - 6, ganz besonders bevorzugt 2 - 4 und insbesondere 2-3 (Meth)acrylatgruppen, bevorzugt Acrylatgruppen tragen.

Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000, Poly-1,3-Propandiol mit einer Molmasse zwischen 134 und 1178, Polyethylenglykol mit einer Molmasse zwischen 106 und 898, sowie Epoxy(meth)acrylate, Urethan(meth)acrylate oder Polycarbonat(meth)acrylate.

Weitere Beispiele sind (Meth)Acrylate von Verbindungen der Formel (Ia) bis (Ic), 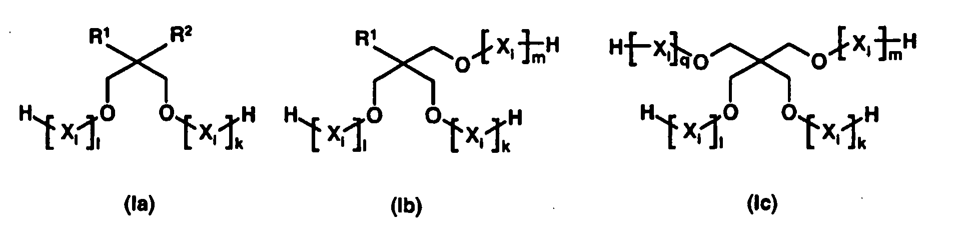 worin
R¹ und R² unabhängig voneinander Wasserstoff oder gegebenenfalls durch Aryl, Alkyl, Aryloxy, Alkyloxy, Heteroatome und/oder Heterocyclen substituiertes C₁- C₁₈-Alkyl,
k, l, m, q unabhängig voneinander je für eine ganze Zahl von 1 bis 10, bevorzugt 1 bis 5 und besonders bevorzugt 1 bis 3 steht und
jedes Xᵢ für i =1 1 bis k, 1 bis 1, 1 bis m und 1 bis q unabhängig voneinander.ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit. Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach ethoxyliertem Trimethylolpropan.

Besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethyihexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxy-cyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)₂-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrofacton und/oder Methyl-e-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin kann es sich bei der multifunktionellen, polymerisationsfähigen Verbindung um Urethan(meth)acrylate, Epoxy(meth)acrylate oder Carbonat(meth)acrylate handeln.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan(meth)acrylate enthalten zusätzlich noch ionische und/oder nichtionische hydrophile Gruppen, welche z.B. durch Aufbaukomponenten wie Hydroxycarbonsäuren ins Urethan eingebracht werden.

Die verwendbaren Polyurethane enthalten als Aufbaukomponenten im wesentlichen:
(a) mindestens ein organisches aliphatisches, aromatisches oder cycloaliphatisches Di- oder Polyisocyanat,
(b) mindestens eine Verbindung mit mindestens einer gegenüber Isocyanat reaktiven Gruppe und mindestens einer radikalisch polymerisierbaren ungesättigten Gruppe und
(c) gegebenenfalls mindestens eine Verbindung mit mindestens zwei gegenüber Isocyanat reaktiven Gruppen.

Als Komponente (a) kommen Verbindungen in Frage, wie sie oben als Verbindungen B aufgeführt sind.

Als Komponente (b) kommen Verbindungen in Betracht, die mindestens eine gegenüber Isocyanat reaktive Gruppe und mindestens eine radikalisch polymerisierbare Gruppe tragen.

Gegenüber Isocyanat reaktive Gruppen können z.B. sein -OH, -SH, -NH₂ und -NHR³, wobei R³ Wasserstoff oder eine 1 bis 4 Kohlenstoffatome enthaltende Alkylgruppe, wie z.B. Methyl, Ethyl, n-Propyl, iso-Propyl, n-Butyl, iso-Butyl, sek-Butyl oder *tert*-Butyl, bedeutet.

Komponenten (b) können solche Verbindungen sein, wie sie oben als Verbindungen A aufgeführt sind.

Als Komponente (c) kommen Verbindungen in Betracht, die mindestens zwei gegenüber Isocyanat reaktive Gruppen, beispielsweise -OH, -SH, -NH₂ oder -NHR⁴, worin R⁴ darin unabhängig voneinander Wasserstoff, Methyl, Ethyl, *iso*-Propyl, n-Propyl, n-Butyl, iso-Butyl, *sek*-Butyl oder *ter*tButyl bedeuten kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, 2,2-Bis(4-hydroxycyclohexyl)propan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Amingruppen enthaltende Polymere von z.B. Poly-N-vinylformamid.

Besonders geeignet sind hier die cycloaliphatischen Diole, wie z.B. Bis-(4-hydroxy-cyclohexan) isopropyliden, Tetramethylcyclobutandiol, 1,2-, 1,3- oder 1,4-Cyclohexandiol, Cyclooctandiol oder Norbornandiol.

Die verwendbaren Polyurethane werden durch Reaktion der Komponenten (a), (b) und (c) miteinander erhalten.

Dabei kann die molare Zusammensetzung (a):(b):(c) pro 3 mol reaktive Isocycanatgruppen in
(a) in der Regel beliebig gewählt werden, bevorzugt ist sie wie folgt:
(b) 1,5 - 3,0, bevorzugt 2,0 - 2,9, besonders bevorzugt 2,0 - 2,5 und insbesondere 2,0 - 2,3 mol gegenüber Isocyanat reaktive Gruppen sowie
(c) 0 -1,5, bevorzugt 0,1 -1,0, besonders bevorzugt 0,5 -1,0 und insbesondere 0,7 -1,0 mol an gegenüber Isocyanat reaktiven Gruppen.

Bei Verwendung der Polyurethane in wäßrigen Systemen sind bevorzugt im wesentlichen alle vorhandenen Isocyanatgruppen abreagiert.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.
Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.
Wasserfrei bedeutet dabei, daß der Wassergehalt im Reaktionssystem nicht mehr als 5 Gew.-% beträgt, bevorzugt nicht mehr als 3 Gew.-% und besonders bevorzugt nicht mehr als 1 Gew.-%.

Die Reaktion kann in Gegenwart mindestens eines geeigneten Inertgases durchgeführt werden, z.B. Stickstoff, Argon, Helium, Kohlenstoffdioxid oder dergleichen, dies ist jedoch in der Regel nicht erforderlich.

Die Reaktion kann auch in Gegenwart eines inerten Solvens durchgeführt werden, z.B. Aceton, Iso-butyl-methylketon, Toluol, Xylol, Butylacetat oder Ethoxyethylacetat.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, iso-Butylenoxid, 1-Butenoxid, 2-Butenoxid, Vinyloxiran, Styroloxid oder Epichlorhydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von PhenoUDicyclopentadien, z.B. 2,5-bis[(2,3-E-poxypropoxy)phenyl]octahydro-4,7-methano-5H-inden) (CAS-Nr. [13446-85-O]), Tris[4-(2,3-epoxypropoxy)phenyl]methan Isomere )CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)-cyclohexyl]propan, CAS-Nr. [13410-58-7]).

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2(Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 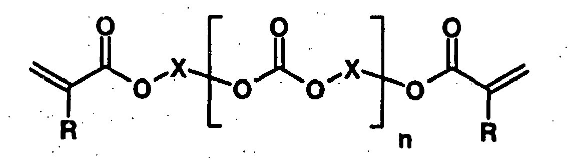 worin R für H oder CH₃, X für eine C₂₋C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Unter den multifunktionellen, polymerisationsfähigen Verbindung sind Urethan(meth)-acrylate besonders bevorzugt.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

In einer bevorzugten Ausführungsform der Erfindung enthält die Beschichtungsmasse mindestens ein Pigment.

Wird ein Cer-haltiges Pigment eingesetzt, so wirkt dieses aufgrund seiner geringen Löslichkeit, die Pigmente auszeichnet, nicht als signifikante Cer-Quelle im Sinne dieser Erfindung. Die Löslichkeit von Pigmenten beträgt in der Regel nicht mehr als 1 g/ 1000 g Anwendungsmedium bei 25 °C.

Als Beschleuniger für die thermische Nachhärtung kann z.B. Zinnoctoat, Zinkoctoat, Dibutylzinnlaureat oder Diaza[2.2.2]bicyclooctan verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die Zusammensetzung der Beschichtungsmassen ist in der Regel wie folgt:
- Anteil der mindestens einen Cer(IV)-Verbindung wie oben angegeben,
- 0,1 bis 99,8 Gew.-%, bevorzugt 0,5 - 98, besonders bevorzugt 1 - 95, ganz besonders bevorzugt 10 bis 90 und insbesondere 25 bis 85 Gew.-% der Verbindungen A und B bzw. C und D,
- 0 bis 5 Gew.-%, bevorzugt 0,1-5. besonders bevorzugt 0,2 - 4 und ganz besonders bevorzugt 0,5 bis 3 Gew.-% mindestens eines Photoinitiators,
- 0 bis 25 Gew.-%, bevorzugt 0,5 - 20, besonders bevorzugt 1 -15 und ganz besonders bevorzugt 5 bis 15 Gew.-% mindestens eines Lösungsmittels,
- 0-50 Gew.%, bevorzugt 5 bis 30, besonders bevorzugt 10 bis 20 und ganz besonders bevorzugt 10 bis 15 Gew.-% mindestens einen radikalisch polymerisationsfähigen Monomers,
- 0 bis 50 Gew.-%, bevorzugt 0 bis 30, besonders bevorzugt 5 bis 30 und ganz besonders bevorzugt 10 bis 25 Gew.-% mindestens einer multifunktionellen, polymerisationsfähigen Verbindung und
- bis zu 50 Gew.%, bevorzugt 1 bis 50, besonders bevorzugt 5 bis 30 und ganz besonders bevorzugt 20 bis 30 Gew.-% weiterer lacktypischer Additive, mit der Maßgabe, daß die Summe aller Komponenten 100 Gew.-% ergibt

Es stellt einen Vorteil der vorliegenden Erfindung dar, dass durch das Vorhandensein der Cer-Verbindung bei einer gleichzeitigen Strahlungshärtung die Beschichtungsmasse auch in Schattenbereichen thermisch gehärtet wird und in pigmentierten Beschichtungsmassen eine Härtung thermisch ausgelöst werden kann.

Die Beschichtung der Substrate erfolgt nach üblichen, dem Fachmann bekannten Verfahren, wobei man wenigstens eine erfindungsgemäße Beschichtungsmasse oder eine diese enthaltende Lackformulierung auf das zu beschichtende Substrat in der gewünschten Stärke aufbringt und die flüchtigen Bestandteile der Beschichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man die erfindungsgemäße Beschichtungsmasse oder diese enthaltende Lackformulierungen, gegebenenfalls mit thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der erfindungsgemäßen Beschichtungsmasse oder Lackformulierung zunächst bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine thermische und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise- zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.
Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Ein weiterer Gegenstand der Erfindung ist ein Verfahren zur Beschichtung von Substraten, wobei man
i) ein Substrat mit einer Beschichtungsmasse, wie zuvor beschrieben, beschichtet,
ii) flüchtige Bestandteile der Beschichtungsmasse zur Filmbildung unter Bedingungen entfernt, bei denen der Photoinitiator im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet

Dabei können die Schritte iv) und iii) auch in umgekehrter Reihenfolge durchgeführt, d. h. der Film kann zuerst thermisch und dann mit energiereicher Strahlung gehärtet werden.

Die erfindungsgemäßen Beschichtungsmassen und diese enthaltende Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen.

Besonders bevorzugt eignen sich die erfindungsgemäßen Beschichtungsmassen als oder in Außenbeschichtungen, also solche Anwendungen, die dem Tageslicht ausgesetzt sind, bevorzugt von Gebäuden oder Gebäudeteilen, Innenbeschichtungen, Stra-ßenmarkierungen, Beschichtungen auf Fahrzeugen und Flugzeugen. Insbesondere werden die erfindungsgemäßen Beschichtungsmassen als oder in Automobilklar- und -decklacke(n) eingesetzt.

Die folgenden Beispiele sollen die Eigenschaften der Erfindung erläutern, ohne sie aber einzuschränken.

### Beispiele

Als "Teile" oder "%" seien in dieser Schrift, wenn nicht anders angegeben, "Gewichtsteile" oder "Gewicht%" verstanden.

### Beispiel 1: Cer(IV) als thermischer Initiator in DualCure Systemen

Zu einer Mischung aus 33 Gew.% eines Allophanats aus Hexamethylendiisocyanat und Hydroxyethylacrylat wie beschrieben in WO 00/39183, S. 24, Tabelle 1 und 54 Gew.% Laromer® LR 8765 der BASF AG (aliphatisches Urethanacrylat in 1,6-Hexandioldiacrylat, entspricht einem Verhältnis NCO/OH = 1) wurde als Initiatorsystem eine Mischung von 1,5 Gew.% Lucirin® TPO der BASF AG, 0,5 Gew.% Ce(NH₄)₂(NO₃)₆ und 11 Gew.% Ethanol zugesetzt.

Die Formulierung wurde auf eine Glasplatte aufgerakeit, so dass der Trockenfilm eine Schichtdicke von 100 µm aufwies. Nach 20 min. Erhitzen auf 120°C konnte ein klebfreier, relativ harter Film erhalten werden (Pendelhärte nach DtN 53157:173 s). Mit Hilfe der FTIR-Spektroskopie zeigte sich ein vollständiger Umsatz der NCO- und Acrylat-Gruppen.

Für die NIR-Spektroskopie wurden 2 mm dicke Filme von obiger Formulierung präpariert und auf 80 °C erhitzt. Nach 18 h zeigte sich in den IR-Spektren ein vollständiger Umsatz der Acrylatbande.

### Vergleichsbeispiel 1:

Die Beschichtungsmasse aus Beispiel 1 ohne die Cer-Verbindung wurde analog appliziert und thermisch behandelt.

Selbst nach 21 h Erhitzen auf 120°C blieb der Film flüssig.

Für die NIR-Spektroskopie wurden 2 mm dicke Filme von obiger Formulierung präpariert und auf 80 °C erhitzt. Nach 18 h konnte anhand der IR-Spektren praktisch kein Umsatz der Acrylatbande beobachtet werden.

### Beispiele 2 und 3:

Obige Formulierung kann bei zusätzlicher Bestrahlung als DualCure-System betrachtet werden, bei dem drei Typen von Härtungsmechanismen ablaufen:
- Thermische Härtung von Isocyanat / Alkohol
- Thermische Härtung der Acrylat-Funktion, initiiert durch Ce(IV)
- Strahlungshärtung der Acrylat-Funktion, initiiert durch Photoinitiator
Zu einer Mischung aus 33 Gew.% eines Allophanats aus Hexamethylendiisocyanat und Hydroxyethylacrylat wie beschrieben in WO 00/39183, S. 24, Tabelle 1 und 54 Gew.% Laromer® LR 8765 der BASF AG (aliphatisches Epoxyacrylat, entspricht einem Verhältnis NCO/OH = 1) wurde als Initiatorsystem eine Mischung von 1,5 Gew.% Lucirin TPO der BASF AG, 0,5 Gew.% Ce(NH₄)₂(NO₃)₆ und 11 Gew.% Ethylenglykol zugesetzt.

Die Formulierung wurde auf eine Glasplatte aufgerakelt, so dass der Trockenfilm eine Schichtdicke von 16 *µ*m aufwies. Die UV-Härtung erfolgte in Luft mit einer UV-Dosis von 0,4 J cm⁻². Mit Hilfe der FTIR-Spektroskopie konnten die relativen Umsätze der NCO- und Acrylat-Funktionen bestimmt werden.

| | | Relative Umsätze [%] | | | Relative Umsätze [%] | |
|---|---|---|---|---|---|---|
| Beispiel | 1. Verfahrensschritt | NCO | C=C | 2. Verfahrensschritt | NCO | C=C |
| 2 | UV | 6 | 94 | 60 min. 80°C | 38 | 96 |
| 3 | 60 min. 80°C | 100 | 79 | UV | 100 | 82 |

## Patentansprüche

1. Beschichtungsmassen, enthaltend
- mindestens eine Cer(IV)-Verbindung, entweder
- mindestens eine Verbindung A mit mindestens einer gegenüber Isocyanat reaktiven Gruppe und mindestens einer radikalisch polymerisierbaren, ungesättigten Gruppe und
- mindestens eine isocyanatgruppenhaltige Verbindung B, oder
- mindestens eine Verbindung C mit mindestens einer Isocyanatgruppe und mindestens einer radikalisch polymerisierbaren, ungesättigten Gruppe und
- mindestens eine Verbindung D mit mindestens einer gegenüber Isocyanat reaktiven Gruppe,
und weiterhin
- gegebenenfalls mindestens einen Photoinitiator,
- gegebenenfalls mindestens ein Lösungsmittel,
- gegebenenfalls mindestens ein radikalisch polymerisationsfähiges Monomer,
- gegebenenfalls mindestens eine multifunktionelle, polymerisationsfähige Verbindung und
- gegebenenfalls weitere lacktypische Additive.

2. Beschichtungsmassen gemäß Anspruch 1, **dadurch gekennzeichnet, daß** die Cer(IV)-Verbindung ausgewählt ist aus der Gruppe bestehend aus Ammonium-hexanitratocerat(IV) (Cer(IV)ammoniumnitrat, (NH₄)₂[Ce(NO₃)₆]), Natriumhexanitratocerat(IV) (Na₂[Ce(NO₃)₆]), Kaliumhexanitratocerat(IV) (K₂[Ce(NO₃)₆]), Cer(IV)ammoniumsulfat (Ce(NH₄)₂(NO₃)₆)), Cer(IV)hydroxid, Cer(IV)isopropylat-Isopropanol Komplex, Cer(IV)oxid (CeO₂) und Cer(IV)sulfat (Ce(SO₄)₂).

3. Beschichtungsmassen gemäß Anspruch 1, **dadurch gekennzeichnet, daß** die Cer(IV)-Verbindung in der Beschichtungsmasse durch Oxidation von Cer-Verbindungen einer niedrigeren Oxidationsstufe erhalten wird.

4. Beschichtungsmassen gemäß Anspruch 3, **dadurch gekennzeichnet, daß** als Cer-Verbindungen einer niedrigeren Oxidationsstufe Cer(III)-Verbindungen eingesetzt werden.

5. Beschichtungsmassen gemäß einem der vorstehenden Ansprüche, **dadurch gekennzeichnet, daß** die mindestens eine Verbindung A mit mindestens einer gegenüber Isocyanat reaktiven Gruppe und mindestens einer radikalisch polymerisierbaren ungesättigten Gruppe ausgewählt ist aus der Gruppe bestehend aus 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrytat, 2-Aminoethyl(meth)acrylamid, 2-Aminopropyl(meth)acrylamid, 3-Aminopropyl(meth)acrylamid, 2-Hydroxyethyl(meth)acfylamid, 2-Hydroxypropyl(meth)acrylamid oder 3-Hydroxypropyl(meth)acrylamid sowie die Umsetzungsprodukte von (Meth)acrylsäure mit Bisphenol-A-diglycidylether, Bisphenol-F-diglycidylether, 1,4-Butandioldiglycidether, 1,6-Hexandioldiglycidylether, Trimethylolpropantriglycidylether oder Pentaerythrittetraglycidylether.

6. Beschichtungsmassen gemäß einem der vorstehenden Ansprüche, **dadurch gekennzeichnet, daß** es sich bei der mindestens einen isocyanatgruppenhaltige Verbindung B um ein Diisocyanat mit 4 bis 20 C-Atomen handelt.

7. Beschichtungsmasse gemäß Anspruch 6, **dadurch gekennzeichnet, daß** es sich bei dem Diisocanat um ein aliphatisches oder cycloaliphatisches Diisocyanat handelt.

8. Verfahren zur Beschichtung von Substraten, **dadurch gekennzeichnet, daß** man ein Substrat mit einer Beschichtungsmasse gemäß einem der vorstehenen Ansprüche beschichtet.

9. Substrat, beschichtet mit einer Beschichtungsmasse gemäß einem der Ansprüche 1 bis 7.

10. Verwendung von Cer(IV)-Verbindungen in der Dual-Cure Härtung.

## Claims

1. A coating composition comprising
- at least one cerium(IV) compound,
either
- at least one compound A having at least one isocyanate-reactive group and at least one free-radically polymerizable unsaturated group and
- at least one isocyanato-functional compound B,
or
- at least one compound C having at least one isocyanate group and at least one free-radically polymerizable unsaturated group and
- at least one compound D having at least one isocyanate-reactive group, and additionally
- if appropriate at least one photoinitiator,
- if appropriate at least one solvent,
- if appropriate at least one free-radically polymerizable monomer,
- if appropriate at least one polyfunctional polymerizable compound, and
- if appropriate further, typical coatings additives.

2. The coating composition according to claim 1, wherein the cerium(IV) compound is selected from the group consisting of ammonium hexanitratocerate(IV) (cerium(IV) ammonium nitrate, (NH₄)₂[Ce(NO₃)₆]), sodium hexanitratocerate(IV) (Na₂[Ce(NO₃)₆]), potassium hexanitratocerate(IV) (K₂[Ce(NO₃)₆]), cerium(IV) ammonium sulfate (Ce(NH₄)₂(NO₃)₆)), cerium(IV) hydroxide, cerium(IV) isopropoxide/isopropanol complex, cerium(IV) oxide (CeO₂), and cerium(IV) sulfate (Ce(SO₄)₂).

3. The coating composition according to claim 1, wherein the cerium(IV) compound in the coating composition is obtained by oxidizing cerium compounds in a lower oxidation state.

4. The coating composition according to claim 3, wherein cerium(III) compounds are used as cerium compounds in a lower oxidation state.

5. The coating composition according to any one of the preceding claims, wherein the at least one compound A having at least one isocyanate-reactive group and at least one free-radically polymerizable unsaturated group is selected from the group consisting of 2-hydroxyethyl (meth)acrylate, 2- or 3-hydroxypropyl (meth)acrylate, 1,4-butanediol mono(meth)acrylate, neopentyl glycol mono(meth)acrylate, glycerol mono- and di(meth)acrylate, trimethylolpropane mono- and di(meth)acrylate, pentaerythritol mono-, di-, and tri(meth)acrylate, and 4-hydroxybutyl vinyl ether, 2-aminoethyl (meth)acrylate, 2-aminopropyl (meth)acrylate, 3-aminopropyl (meth)acrylate, 4-aminobutyl (meth)acrylate, 6-aminohexyl (meth)acrylate, 2-thioethyl (meth)acrylate, 2-aminoethyl(meth)acrylamide, 2-aminopropyl(meth)acrylamide, 3-aminopropyl(meth)acrylamide, 2-hydroxyethyl(meth)acrylamide, 2-hydroxypropyl(meth)acrylamide or 3-hydroxypropyl(meth)acrylamide, and the reaction products of (meth)acrylic acid with bisphenol A diglycidyl ether, bisphenol F diglycidyl ether, 1,4-butanediol diglycidyl ether, 1,6-hexanediol diglycidyl ether, trimethylolpropane triglycidyl ether or pentaerythritol tetraglycidyl ether.

6. The coating composition according to any one of the preceding claims, wherein said at least one isocyanoto-functional compound B is a diisocyanate having 4 to 20 carbon atoms.

7. The coating composition according to claim 6, wherein said diisocyanate is an aliphatic or cycloaliphatic diisocyanate.

8. A method of coating substrates, which comprises coating a substrate with a coating composition according to any one of the preceding claims.

9. A substrate coated with a coating composition according to any one of claims 1 to 7.

10. The use of cerium(IV) compounds in dual-cure curing.

## Revendications

1. Masses de revêtement contenant :
- au moins un composé de Cer (IV),
soit :
- au moins un composé A ayant au moins un groupement réactif vis-à-vis de l'isocyanate et au moins un groupement insaturé polymérisable par voie radicalaire, et
- au moins un composé B contenant des groupements isocyanate,
soit :
- au moins un composé C ayant au moins un groupement isocyanate et au moins un groupement insaturé polymérisable par voie radicalaire, et
- au moins un composé D ayant au moins un groupement réactif vis-à-vis de l'isocyanate,
et, en outre,
- éventuellement, au moins un photoinitiateur,
- éventuellement, au moins un solvant,
- éventuellement, au moins un monomère polymérisable par voie radicalaire,
- éventuellement, au moins un composé polymérisable multifonctionnel, et
- éventuellement, d'autres additifs typiques des vernis.

2. Masses de revêtement selon la revendication 1,
**caractérisées en ce que** le composé de Cer (IV) est choisi dans le groupe constitué de l'hexanitrato-cérate(IV) d'ammonium (ammonium-nitrate de Cer (IV), (NH₄)₂ [Ce (NO₃)₆]), de l' hexanitrato-cérate (IV) de sodium (Na₂[Ce(NO₃)₆]), de l'hexanitratocérate (IV) de potassium (K₂[Ce(NO₃)₆]), de l'ammonium-sulfate de Cer (IV) (Ce (NH₄)₂(NO₃)₆) , de l'hydroxyde de Cer(IV), du complexe isopropylate-isopropanol de Cer(IV), de l'oxyde de Cer(IV) (CeO₂) et du sulfate de Cer (IV) (Ce(SO₄)₂) .

3. Masses de revêtement selon la revendication 1, **caractérisées en ce que** l'on obtient le composé de Cer (IV) dans la masse de revêtement par oxydation de composés de Cer de degré d'oxydation plus faible.

4. Masses de revêtement selon la revendication 3, **caractérisées en ce que** l'on utilise des composés de Cer(III) comme composés de Cer de degré d'oxydation plus faible.

5. Masses de revêtement selon l'une quelconque des revendications précédentes, **caractérisées en ce que** le au moins un composé A ayant au moins un groupement réactif vis-à-vis de l'isocyanate et au moins un groupement insaturé polymérisable par voie radicalaire, est choisi dans le groupe constitué des composés suivants : (méth)acrylate de 2-hydroxyéthyle, (méth)acrylate de 2- ou de 3-hydroxypropyle, mono(méth)acrylate de 1,4-butanediol, mono (méth) acrylate de néopentylglycol, mono- et di(méth)acrylate de glycérine, mono- et di(méth)acrylate de triméthylolpropane, mono-, di- et tri(méth)acrylate de pentaérythritol ainsi que d'éther vinylique de 4-hydroxybutyle, (méth)acrylate de 2-aminoéthyle, (méth)acrylate de 2-aminopropyle, (méth)acrylate de 3-aminopropyle, (méth)acrylate de 4-aminobutyle, (méth)acrylate de 6-aminohexyle, (méth)acrylate de 2-thioéthyle, (méth)acrylamide de 2-aminoéthyle, (méth)acrylamide de 2-aminopropyle, (méth)acrylamide de 3-aminopropyle, (méth)acrylamide de 2-hydroxyéthyle, (méth)acrylamide de 2-hydroxypropyle ou (méth)acrylamide de 3-hydroxypropyle, ainsi que les produits de la réaction de l'acide (méth)acrylique avec le diglycidyléther de bisphénol-A, le diglycidyléther de bisphénol-F, le diglycidyléther de 1,4-butanediol, le diglycidyléther de 1,6-hexanediol, le triglycidyléther de triméthylolpropane ou le tétraglycidyléther de pentaérythritol.

6. Masses de revêtement selon l'une quelconque des revendications précédentes, **caractérisées en ce que** le au moins un composé B contenant des groupements isocyanate est un diisocyanate ayant 4 à 20 atomes de carbone.

7. Masses de revêtement selon la revendication 6,
**caractérisées en ce que** le diisocyanate est un diisocyanate aliphatique ou cycloaliphatique.

8. Procédé de revêtement de substrats, **caractérisé en ce que** l'on applique sur un substrat une masse de revêtement selon l'une quelconque des revendications précédentes.

9. Substrat revêtu d'une masse de revêtement selon l'une quelconque des revendications 1 à 7.

10. Utilisation de composés de Cer(IV) pour le durcissement du type durcissement double.
